# EUROPEAN PATENT APPLICATION

(11) **EP 4 733 284 A1**
(43) Date of publication of application: **29.04.2026**
(21) Application number: 24208402.8
(22) Date of filing: 23.10.2024
(51) Int. Cl.: C04B 24/28, C04B 28/02, C04B 28/10, C04B 103/20, C04B 111/00, C04B 111/27, C04B 111/60, C04B 111/70, C08G 18/00, C04B 26/16

(54) **RETARDING AGENT IN ISOCYANATE COMPONENT OF POLYURETHANE/UREA CEMENTITIOUS HYBRID SYSTEMS**

(71) Applicant: Sika Technology AG, 6340 Baar (CH)
(72) Inventor: BERRES, Antonia, 83308 Trostberg (DE); STEIDL, Norbert, 83308 Trostberg (DE); KLAPDOHR, Simone, 83308 Trostberg (DE); BELL, David, Redditch, B98 8YP (GB); BENTLEY, Robert, 163 53 Spånga (SE); PALMER, Brian, Redditch, B98 8YP (GB)
(74) Representative: Sika Patent Attorneys

(57) **Abstract**

The present invention relates to a multi-component composition for the manufacture of polyurethane/urea cementitious hybrid systems, to the preparation thereof, and to the use of the composition for the preparation of a flooring, waterproofing, screed, primer, wall paint, grouting, roofing or coating in construction applications. Moreover, it relates to the use of an aromatic and/or CH-acidic 1,3-dicarbonyl compound in the isocyanate component of the multi-component composition for extending the work life time of a polyurethane/urea cementitious hybrid system and improving the storage stability.

## Description

The present invention relates to a multi-component composition, in particular for the manufacture of polyurethane/urea cementitious hybrid systems, to the preparation thereof, and to the use of the composition for the preparation of a flooring, waterproofing, screed, primer, wall paint, grouting, roofing or coating in construction applications.

Polyurethane/urea cementitious hybrid systems have been widely applied in construction applications, such as in self-leveling fields or waterproofing fields. There are three main reactions in polyurethane/urea cementitious hybrid systems: isocyanate reactions including polyol/isocyanate reaction (i.e. polyurethane reaction) and H₂O/isocyanate reaction (i.e. urea reaction), and cement hydration. Catalysts such as amine-based catalysts or catalysts based on organic metal compounds are currently incorporated in the system to accelerate the isocyanate reactions. The alkaline fillers in the cement also create a favorable condition for the isocyanate reactions. The fast isocyanate reactions will bring the challenge that the workers must finish the application process within a short period of time (e.g. 15-25 minutes), leaving a critically narrow working window. Thus, an extended working time of the polyurethane/urea cementitious hybrid systems is essentially needed in the market.

Naturally, the retardation of polyurethane or urea reactions in a polyurethane/urea cementitious hybrid system could be achieved by reducing the dosage of reactive isocyanates or catalysts. However, this approach will adversely affect the final properties of the system.

US 3763070 A discloses cement compositions suitable for flooring applications which comprise a hydraulic cement, a silica filler, water, an organic polyisocyanate and a compound or mixture of compounds selected from monohydric alcohols, monocarboxylic acids having a molecular weight of at least 60 and compounds which contain on average at least one epoxy group per molecule. The presence of the monohydric alcohols, monocarboxylic acids or epoxy compounds delays the rate of setting of the compositions, thus extending the working time from 2 hours to 3-6 hours. For instance, epoxy groups do not undergo direct reaction with isocyanate groups. Instead, they react with the reaction product of water and isocyanate groups, i.e. liberated primary amino groups, and take part in the curing of the compositions. The epoxy compounds therefore serve as additional cross-linking agents, adding to the polymer network built up by normal isocyanate reaction with water and any other isocyanate-reactive material, which may be present. These additional compounds act as main reactive raw materials and would affect some of the final performances of the cured samples, hence rendering the cementitious hybrid system complicated and hard to adjust to different applications. Besides, the disclosed polyurethane cementitious hybrid system differs from state-of-art technology in that it does not comprise any catalyst, so the setting time is as long as several hours.

Retarding additives for extending the work time of polyurethane/urea cementitious hybrid systems are known. For instance, our WO 2020/164928 A1 describes a multi-component composition comprising:
(A) at least one isocyanate component selected from the group consisting of mono isocyanate, polyisocyanate and NCO terminated prepolymer;
(B) at least one organic isocyanate-reactive compound selected from the group consisting of polyol, polyamide, polyamine, and polyesteramide;
(C) water;
(D) catalyst;
(E) at least one acidic additive; and
(F) hydraulic binder;
wherein the at least one acidic additive is selected from the group consisting of Lewis acids, acid precursors, acidic buffers or the mixture thereof and is in an amount of 0.01 to 3 wt.-%, based on the total weight of the composition.

In a preferred embodiment, the acidic additive is selected from carboxylic acids, anhydrides, esters and sulfonic acids. Moreover, the acidic additive may be selected from diketones. Furthermore, the acidic additive may be selected from compounds having the general formula (V):

R₅-C(O)-CHR₄-C(O)-R₆ (V)

wherein
R₄ is selected from H and C₁-C₈-alkyl,
R₅ and R₆ are independently from each other selected from C₁-C₈-alkyl and C₁-C₈-alkoxy, or
R₅ and R₄, or R₅ and R₆, together with the carbon atoms attached, form a 5- to 8-membered ring or hetero ring, with the ring member optionally replaced by N or O, and the ring member optionally substituted by C₁-C₆-alkyl, cyano, amino, hydroxyl, or oxo group.

It is described that by adding the specific acidic additives to the multi-component composition, the thus-obtained polyurethane/urea cementitious hybrid system has a substantially extended working time, and the flooring, screed, primer, wall paint, roofing or coating obtained thereby has excellent hardness and overnight cure.

However, additives that fulfill the above-mentioned requirements may be expensive, in short supply, not environmentally safe, pose health hazards, and the like. It is therefore necessary to have as many additives available as possible to choose from. Moreover, it is desirable to find additives that impart extended working times in polyurethane/urea cementitious hybrid systems.

A solution to this problem is described in our EP 4063422 A1 which discloses the use of aromatic and/or CH-acidic 1,3-dicarbonyl compound as excellent retarding additives for polyurethane/urea cementitious hybrid systems. In particular, a multi-component composition is described therein, which comprises:
(A) at least one isocyanate component selected from the group consisting of mono isocyanate, polyisocyanate and NCO terminated prepolymer;
(B) at least one organic isocyanate-reactive compound selected from the group consisting of polyol, polyamide, polyamine, and polyesteramide;
(C) water;
(D) optionally a catalyst;
(E) at least one aromatic and/or CH-acidic 1,3-dicarbonyl compound; and
(F) a hydraulic binder.

However, while the retarding additives used in multi-component compositions provides a substantially extended working time for the polyurethane/urea cementitious hybrid systems, there is the problem that the retarding additives included in multi-component compositions can reduce the storage stability of the multi-component compositions.

Hence, an object of the present invention was to provide a multi-component composition, in particular for polyurethane/urea cementitious hybrid systems, having an excellent working time of the mixture obtained after mixing the components of the multi-component compositions, and at the same time exhibit a good storage stability of the multi-component composition or the components thereof, respectively.

This object has been achieved with the features of the independent claims. The dependent claims pertain to preferred embodiments.

It was surprisingly found that aromatic and/or CH-acidic 1,3-dicarbonyl compounds are excellent retarding additives for multi-component compositions, in particular for polyurethane/urea cementitious hybrid systems, and at the same time maintain or do not significantly reduce the storage stability of the multi-component composition, in particular for polyurethane/urea cementitious hybrid systems, when the aromatic and/or CH-acidic 1,3-dicarbonyl compound is incorporated into the component which comprises the isocyanate compound.

A good storage stability can refer to the maintenance or only moderate decrease of the homogeneity of the components after storage for a certain time and/or to the maintenance or only moderate decrease of the properties of the multi-component composition such as working time, when the multi-component composition is used after storage of the components for a certain time as compared to its use immediately after preparation of the components.

According to a first aspect, the present invention provides a multi-component composition comprising:
a component (A) comprising
   (a1) at least one organic isocyanate-reactive compound selected from the group consisting of polyol, polyamide, polyamine, and polyesteramide;
   (a2) water; and
   (a3) optionally a catalyst;
a component (B) comprising
   (b1) at least one isocyanate compound selected from the group consisting of mono isocyanate, polyisocyanate and NCO terminated prepolymer; and
   (b2) at least one aromatic and/or CH-acidic 1 ,3-dicarbonyl compound;
and a component (C) comprising
   (c) a hydraulic binder.

As used herein, the term "multi-component composition" refers to a composition composed of two or more components, in the present case three or more components such as three or four components, each of which may also be a mixture of several compounds. Each of the components of the multi-component composition are separate from each other and usually included in independent packages (kit of packages) or included in sections of a package, wherein the sections are separated from each other in the package. The separate storage of the components is necessary, since upon mixing of the components, the hardening reactions of the mixed compounds will start so that a limited working time is available after mixing. The components of the multi-component composition can be blended together if needed, usually on the spot of application.

In other word, component (A), component (B), component (C) and optionally further components are present as components separate from each other. The separate components are stored until upon application the components are mixed, generally on the spot of application. The mixture of the components usually results in a polyurethane/urea cementitious hybrid system which hardens within a certain time.

As used herein, the term "prepolymer" refers to a monomer or system of monomers that have been reacted to an intermediate molecular mass state. This material is capable of further polymerization by reactive groups to a fully cured high molecular weight state. It is usually a reaction product of a polyisocyanate with a polyol, which reaction product is NCO terminated.

As used herein, the terms "additive" or "additives" refer to additives included in a formulated system to enhance physical or chemical properties thereof and to provide a desired result. Such additives include, but are not limited to, dyes, pigments, toughening agents, impact modifiers, rheology modifiers, plasticizing agents, thixotropic agents, natural or synthetic rubbers, filler agents, reinforcing agents, thickening agents, opacifiers, inhibitors, fluorescence or other markers, thermal degradation reducers, thermal resistance conferring agents, surfactants, wetting agents, defoaming agents, dispersants, flow or slip aids, biocides, stabilizers, and of course the 1 ,3-dicarbonyls of the invention. In other words, it is contemplated that other additives in addition to said 1 ,3-dicarbonyls may be employed in the multi-component composition or the components of the multi-component composition, respectively, without mentioning.

As used herein, the term "alkyl", either on its own or else in combination with further terms, for example haloalkyl, is understood as meaning a radical of a saturated aliphatic hydrocarbon group and may be branched or unbranched, for example methyl, ethyl, propyl, butyl, isobutyl, pentyl, hexyl, heptyl, octyl, nonyl, decyl, undecyl or dodecyl, or an isomer thereof.

As used herein, the term "alkenyl", either on its own or else in combination with further terms, for example haloalkenyl, is understood as meaning a straight-chain or branched radical which has at least one double bond, for example vinyl, allyl, propenyl, butenyl, butadienyl, pentenyl, pentadienyl, hexenyl, or hexadienyl, or an isomer thereof.

As used herein, the term "cycloalkyl", either on its own or else in combination with further terms, is understood as meaning a fused or non-fused, saturated, monocyclic or polycyclic hydrocarbon ring, for example cyclopropyl, cyclobutyl, cyclopentyl, cyclohexyl, cycloheptyl, or cyclooctyl, or an isomer thereof.

As used herein, the term "alkoxy", either on its own or else in combination with further terms, for example haloalkoxy, is understood as meaning linear or branched, saturated, group having a formula -O-alkyl, in which the term "alkyl" is as defined above, for example methoxy, ethoxy, propoxy, butoxy, pentoxy, or hexoxy, or an isomer thereof.

As used herein, the term "aryl", either on its own or else in combination with further terms, for example arylalkyl and alkylaryl or heteroaryl, is understood to include fused or non-fused aryl, such as phenyl or naphthyl, wherein phenyl is optionally substituted by 1 to 5 groups, and naphtyl is optionally substituted by 1 to 7 groups. The term "aryloxy" means -O-aryl. The term "arylalkoxy" means -O-alkyl-aryl and alkylaryloxy means -O-aryl-alkyl. The term "aryl" is meant to include also heteroaryl.

As used herein, the term "hetero-" is understood as meaning a saturated or unsaturated radical which is interrupted by at least one heteroatom selected from the group consisting of oxygen (O), nitrogen (N), and sulphur (S).

The notation "(hetero)aryl" is used herein as an abbreviation for "aryl and/or heteroaryl".

It should be noted that aromatic 1 ,3-dicarbonyl compounds, too, exhibit CH-acidity, but for the sake of clear definition, the non-aromatic but CH-acidic 1 ,3-dicarbonyl compounds are treated separately from the aromatic 1,3-dicarbonyl compounds.

As used herein, the term "heterocyclyl" is understood as including aliphatic or aromatic heterocyclyl, for example heterocyclylalkyl or heterocyclylalkenyl.

The term "substituted" means that one or more hydrogens on the designated atom is replaced with a selection from the indicated group, provided that the designated atom's normal valency under the existing circumstances is not exceeded, and that the substitution results in a stable compound. Combinations of substituents and/or variables are permissible only if such combinations result in stable compounds. Suitable substituents are meant to include, but are not limited to, C₁-C₆-alkyl-, cyano-, amino-, halogen-, hydroxyl-, or oxo (resulting in aldehyde or keto) groups.

The term "optionally substituted" means optional substitution with the specified groups, radicals or moieties. Unless stated otherwise, optionally substituted radicals may be mono- or poly-substituted, where the substituents in the case of poly- substituted may be the same or different from each other.

As used herein, the groups with suffix "-ene" represent the groups have two covalent bond which could be linked to other radicals, for example -CH₂CH(CH₃)CH₂- (isobutylene), 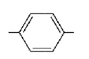 (phenylene), and in the case of phenylene, the covalent bond may be located in ortho-, meta-, or para-position.

Unless otherwise identified, all percentages ("%") are "percent by weight". "Parts" are "parts by weight".

The radical definitions or elucidations given above in general terms or within areas of preference apply to the end products and correspondingly to the starting materials and intermediates. These radical definitions can be combined with one another as desired, i.e. including combinations between the general definition and/or the respective ranges of preference and/or the embodiments.

All the embodiments and the preferred embodiments disclosed herein can be combined as desired, which are also regarded as being covered within the scope of the present invention.

Unless otherwise identified, the temperature refers to room temperature (e.g. 23°C) and the pressure refers to ambient pressure.

### Component (A)

Component (A) comprises (a1) at least one organic isocyanate-reactive compound selected from the group consisting of polyol, polyamide, polyamine, and polyesteramide; (a2) water; and (a3) optionally a catalyst. As mentioned before, component (A) may include one or more other additives to enhance physical or chemical properties. Such additives are familiar to the skilled person and examples are given above and below.

### Isocyanate-reactive compound (a1)

The isocyanate-reactive compound (a1) is generally an organic isocyanate-reactive compound. It is possible to use, as isocyanate-reactive compound (a1) or organic isocyanate-reactive compound (a1), respectively, any of the known compounds used for the production of polyurethane, being selected from the group consisting of polyol, polyamide, polyamine, and polyesteramide. It is preferred to use polyols having at least two hydroxyl groups, for example those with functionality from 2 to 8. By way of example, it is possible to use compounds selected from the group of polyhydric alcohol, aminoalcohol, hydroxyl-ended polyether (polyether polyol), polyester (polyester polyol) or polycarbonate (polycarbonate polyol) and mixtures thereof.

Polyether polyols are by way of example produced from epoxides, for example propylene oxide and/or ethylene oxide, or from tetrahydrofuran with starter compounds exhibiting hydrogen-activity, for example aliphatic alcohols, phenols, amines, carboxylic acids, water, or compounds based on natural substances, for example sucrose, sorbitol or mannitol, with use of a catalyst. As polyether polyols, it is preferred to use a dihydric or trihydric polyether polyol having an equivalent weight of from about 100 to about 1500.

Polyester polyols are by way of example produced from aliphatic or aromatic dicarboxylic acids and polyhydric alcohols, polythioether polyols, hydoxylated polyesteramides, hydroxylated polyacetals, and/or hydroxylated aliphatic polycarbonates, preferably in the presence of an esterification catalyst.

Polycarbonate polyols include those prepared by the reaction of diols, such as 1.3-propanediol, 1,4-butanediol, diethylene glycol, triethylene glycol or thiodiglycol with phosgene or diarylcarbonate, such as diphenyl carbonate. These polymeric polyols may have a number average molecular weight of about 400 to about 15000.

Low molecular polyols can also be added for use as chain extenders or crosslinkers. Low molecular polyols refer to monomeric polyols with molecular weight of less than 400 and at least two hydroxyl groups. Suitable polyols with low molecular weight are in particular diols, triols or both, in each case having molecular weights of less than 350, preferably from 60 to 300 and in particular from 60 to 250. It is possible to use, for example, aliphatic, cycloaliphatic and/or aromatic diols having from 2 to 14, preferably from 2 to 10, carbon atoms, e.g. ethylene glycol, 1,2-propanediol, 1,3-propanediol, 1,2-pentanediol, 1,3-pentanediol, 1,10-decanediol, 1,2-, 1,3-, 1,4-dihydroxycyclohexane, diethylene glycol and triethylene glycol, dipropylene glycol and tripropylene glycol, 1,4-butanediol, 1,6-hexanediol and bis(2-hydroxyethyl)hydroquinone, triols such as 1,2,4-, 1,3,5-trihydroxycyclohexane, glycerol and trimethylolpropane and low molecular weight hydroxyl-comprising polyalkylene oxides based on ethylene oxide and/or 1,2-propylene oxide and the abovementioned diols and/or triols as starter molecules. Among the polyols listed above, castor oil is particularly mentioned and preferred.

### Water (a2)

The multi-component composition comprises (a2) water in component (A) to take part in the reaction forming ureas and in the hydration of the hydraulic binder. Concerning water, there is no particular limitation. Mineral water, deionized water or tap water can be used. Preferably, deionized water is used.

### Catalyst (a3)

The component (A) optionally comprises (a3) a catalyst, wherein it is preferred that a catalyst is contained in component (A). As catalyst (a3), it is possible to use all compounds which accelerate the polyurethane reaction or urea reaction or mixtures of two or more of such catalysts. Such compounds are known in the art. Preferably, catalyst (a3) comprises an alkaline catalyst such as amine-based catalysts and catalysts based on organic metal compounds.

As catalysts based on organic metal compounds, it is possible to use, for example, organic tin compounds such as tin(II) salts of organic carboxylic acids, e.g. tin(II) acetate, tin(II) octoate, tin(II) ethylhexanoate and tin(II) laurate, and the dialkyltin(IV) salts of organic carboxylic acids, e.g. dibutyltin diacetate, dibutyltin dilaurate, dibutyltin maleate and dioctyltin diacetate, and also bismuth carboxylates, e.g. bismuth(III) neodecanoate, bismuth 2-ethylhexanoate and bismuth octanoate, or alkali metal salts of carboxylic acids, e.g. potassium acetate or potassium formate.

Preference is given to using a mixture comprising at least one tertiary amine as catalyst (a3). These tertiary amines are usually compounds which can also bear groups which are reactive toward isocyanate, e.g. OH, NH or NH₂ groups. Some of the most frequently used catalysts are bis(2-dimethylaminoethyl) ether, N,N,N,N,N-pentamethyldiethylenetriamine, N,N,N-triethylaminoethoxyethanol, N,N,N',N'-tetrakis(2-hydroxyethyl)ethylenediamine, dimethylcyclohexylamine, dimethylbenzylamine, triethylamine, triethylenediamine, pentamethyldipropylenetriamine, dimethylethanolamine, N-methylimidazole, N-ethylimidazole, tetramethylhexamethylenediamine, tris(dimethylaminopropyl)hexahydrotriazine, dimethylaminopropylamine, N-ethylmorpholine, diazabicycloundecene, diazabicyclononene, 2,2'-dimorpholinodiethylether, N,N,N'-trimethyl-N'-hydroxyethyl-bisaminoethylether, N,N,N'-trimethylaminoethyl-ethanolamine, N,N,N',N'-tetrakis(2-hydroxypropyl)ethylenediamine, N,N-bis(3-dimethylaminopropyl)-N-isopropanolamine, and N-(3-dimethylaminopropyl)-N,N-diisopropanolamine, or mixtures thereof.

### Component (B)

Component (B) comprises (b1) at least one isocyanate compound selected from the group consisting of mono isocyanate, polyisocyanate and NCO terminated prepolymer; and (b2) at least one aromatic and/or CH-acidic 1,3-dicarbonyl compound. As mentioned before, component (B) may include one or more other additives to enhance physical or chemical properties. Such additives are familiar to the skilled person and examples are given above and below.

### Isocyanate compound (b1)

As isocyanate compound (b1), any monoisocyanate, polyisocyanate and/or NCO terminated prepolymer that are conventionally used for preparing polyurethane resin can be used herein. Suitable monoisocyanate can be all of the aliphatic, cycloaliphatic, and aromatic monoisocyanates, including, but not limited to, n-hexylisocyanate, cyclohexylisocyanate, hexamethylene isocyanate, 2-ethyl hexylisocyanate, n-octyl isocyanate, deodecyl-isocyanate, stearylisocyanate, benzyl isocyanate, and mixtures thereof.

As polyisocyanates which may be used, there may be mentioned aliphatic, cycloaliphatic, araliphatic, and aromatic di- or polyfunctional isocyanates known for the production of polyurethanes, and also any desired mixtures thereof. Examples are diphenylmethane 4,4'-diisocyanate, diphenylmethane 2,4'-diisocyanate, the mixtures of monomeric diphenylmethane diisocyanates with diphenylmethane diisocyanate homologs having a larger number of rings (polymer MDI), tetramethylene diisocyanate, hexamethylene diisocyanate (HDI), 2,2,4- and 2,4,4-trimethylhexamethylene diisocyanates, dicyclohexylmethane diisocyanates, 3-isocyanatomethyl-3,5,5-trimethylcyclohexyl isocyanate, xylylene diisocyanate, mixtures of hexamethylene diisocyanates with oligomeric or polymeric homologs of hexamethylene diisocyanate (trimeric or polynuclear HDI), isophorone diisocyanate (IPDI), tolylene 2,4- or 2,6-diisocyanate (TDI), and mixtures of two or more of these isocyanates. It is preferable to use tolylene diisocyanate (TDI), diphenylmethane diisocyanate (MDI) and trimeric HDI. The above-mentioned isocyanates can also have been modified, for example via incorporation of uretedione, carbamate, isocyanurate, carbodiimide, allophanate, and in particular urethane groups.

Isocyanates used herein can also be isocyanate prepolymers containing NCO end groups. These isocyanate prepolymers are obtainable by reacting di- or polyisocyanates described above, for example at temperatures of from 30 to 100°C, preferably at about 80°C, with isocyanate-reactive compound such as polyols to give the prepolymer. These prepolymers may have an isocyanate content of 2 to 25 wt.-% and a number average molecular weight of about 500 to about 30,000. It is preferable to produce the prepolymers of the invention by using 4,4'-MDI together with uretonimine-modified MDI and with commercially available polyols based on polyesters, for example deriving from adipic acid, or polyethers, for example deriving from ethylene oxide and/or propylene oxide.

Polyols that can be used for the production of isocyanate prepolymers are known to the person skilled in the art. It is preferable here that polyols used for the production of isocyanate prepolymers are those included in the description relating to organic isocyanate-reactive compound (a1).

In a preferred embodiment, the at least one isocyanate compound (b1) is selected from the group consisting of n-hexylisocyanate, cyclohexylisocyanate, hexamethylene isocyanate, 2-ethyl hexylisocyanate, n-octyl isocyanate, deodecyl-isocyanate, stearylisocyanate, benzyl isocyanate, diphenylmethane diisocyanate (MDI), oligomeric and polymeric MDI, tetramethylene diisocyanate, hexamethylene diisocyanate (HDI), trimeric HDI, isophorone diisocyanate (IPDI), tolylene diisocyanate (TDI), and mixtures of two or more of these isocyanates.

It is preferred that at least 50 wt.-%, more preferred at least 75 wt.-%, even more preferred at least 90 wt.-% of the isocyanate compounds have an isocyanate functionality of more than 1, preferably more than 1.2, more preferred more than 1.5, based on the total weight of the isocyanate compounds contained in component (B).

It is more preferred that at least 50 wt.-%, more preferred at least 75 wt.-%, even more preferred at least 90 wt.-% of the isocyanate compounds have an isocyanate functionality of more than 2, preferably between 2.2 and 2.8, based on the total weight of the isocyanate compounds contained in component (B). The isocyanate functionality means the average number of isocyanate groups per isocyanate compound.

### 1,3-Dicarbonyl compound (b2)

The component (B) comprises, in addition to the isocyanate compound (b1), at least one aromatic and/or CH-acidic 1,3-dicarbonyl compound. The at least one aromatic and/or CH-acidic 1,3-dicarbonyl compound serves as a retarding agent which extends the working time of the polyurethane/urea cementitious hybrid system obtained by mixing the components of the multi-component composition. It has been further shown, that due to the incorporation of said 1,3-dicarbonyl compound into isocyanate component (B), a good storage stability of the multi-component composition is achieved. That is, the storage stability of the multi-component composition or of the components thereof, respectively, is at least maintained or only moderately reduced as compared to a corresponding multi-component composition not including a 1,3-dicarbonyl compound.

The 1,3-dicarbonyl compound can be selected from aromatic 1,3-dicarbonyl compounds, CH-acidic 1,3-dicarbonyl compounds, and mixtures thereof.

As used herein, the term "aromatic 1,3- dicarbonyl" is understood as including at least one aryl group and/or heteroaryl group (as defined hereinabove) in the molecule. Although WO 2020/164928 A1 discloses "diketones" in general, it does not disclose the specific aromatic 1,3-dicarbonyl compounds of the invention.

The aromatic 1,3-dicarbonyl compound of the present invention can be selected from the general formula (I)

R₁-C(O)-CHR₂-C(O)-R₃ (I)

wherein
R₁, R₂ and R₃ are independently from each other selected from H, C₁-C₈-alkyl, C₁-C₈-alkoxy, C₄-C₁₀-(hetero)aryl, C₄-C₁₀-(hetero)aryloxy, C₅-C₁₈-alkyl(hetero)aryl, C₅-C₁₈-alkyl(hetero)aryloxy, C₅-C₁₈-(hetero)arylalkyl, C₅-C₁₈-(hetero)arylalkoxy, provided that the molecule comprises at least one aryl group or heteroaryl group, R₁, R₂ and/or R₃ being optionally and independently from each other substituted by C₁-C₆-alkyl-, cyano-, amino-, halogen-, hydroxyl-, or oxo groups, or
R₁ and R₂, R₁ and R₃, or R₂ and R₃, together with the carbon atoms attached, form a 5- to 8-membered ring or hetero ring, provided that the molecule comprises at least one aryl group or heteroaryl group, R₁, R₂ and/or R₃ being optionally substituted by C₁-C₆-alkyl-, cyano-, amino-, halogen,- hydroxyl-, or oxo groups.

The "CH-acidic 1,3-dicarbonyl" compound can be selected from the above general formula (I), which may have no aryl or heteroaryl groups in the molecule but still exhibits CH-acidity having a calculated pKa-value of less than 20, preferably less than 15 and more preferably less than 12. Calculations can be done e.g. according to "Advanced Chemistry Development (ACD/Labs) Software V11.02 (^{©} 1994-2021 ACD/Labs)".

The aromatic 1,3-dicarbonyl compound (b2) is preferably selected from 3-acetyl-6-methyl-2H-pyran-2,4(3H)-dione, 3-oxo-N,3-diphenylpropanamide, benzyl methyl malonate, 3-oxo-N-phenylbutanamide, ethyl 2,4-dioxo-4-phenylbutanoate, 1H-indene-1,3(2H)-dione, 4,4,4-trifluoro-1-(furan-2-yl)butane-1,3-dione, dibenzyl malonate, ethyl 2,4-dioxo-4-phenylbutanoate, 1H-indene-1,3(2H)-dione, 4,4,4-trifluoro-1-(furan-2-yl)butane-1,3-dione, dibenzyl malonate, methyl 3-(4-fluorophenyl)-3-oxopropanoate, 1-(4-chlorophenyl)-4,4,4-trifluoro-1,3-butanedione, 4,4,4-trifluoro-1-(naphthalen-2-yl)butane-1,3-dione, 4,4,4-trifluoro-1-phenylbutane-1,3-dione, diethyl 2-benzylmalonate, 4,4,4-trifluoro-1-(thiophen-2-yl)butane-1,3-dione, diethyl 2-phenylmalonate, 1,3-diphenylpropane-1,3-dione, benzyl 3-oxobutanoate, ethyl 3-oxo-3-phenylpropanoate, 1-phenylbutane-1,3-dione, 1-(4-(tert-butyl)phenyl)-3-(4-methoxyphenyl)propane-1,3-dione, 1-(2-hydroxyphenyl)-3-phenylpropane-1,3-dione, ethyl 3-(3,4-dimethoxyphenyl)-3-oxopropanoate and mixtures thereof.

The CH-acidic 1,3-dicarbonyl compound (b2) is preferably selected from ethyl 2-methyl-3-oxobutanoate, diethyl 2-ethylmalonate, diethyl malonate, diethyl 2-acetylsuccinate, ethyl 2-oxocyclopentane-1-carboxylate, 3-acetyldihydrofuran-2(3H)-one, dimethyl malonate, methyl 3-oxobutanoate, ethyl 3-oxobutanoate, 1,3-dimethylpyrimidine-2,4,6(1H,3H,5H)-trione, diethyl 2-methyl-3-oxosuccinate, ethyl 3-oxohexanoate, dimethyl 3-oxopentanedioate, 2,2,6,6-tetramethylheptan-3,5-dion, tetraethyl ethane-1,1,2,2-tetracarboxylate, ethyl 4,4,4-trifluoro-3-oxobutanoate, 2,2-dimethyl-1,3-dioxane-4,6-dione, diethyl 2-acetamidomalonate, triethyl methanetricarboxylate, 3-chloropentane-2,4-dione, 3-oxobutanamide, 3-acetyl-6-methyl-2H-pyran-2,4(3H)-dione and mixtures thereof.

Although WO 2020/164928 A1 discloses "diketones" in general, it does not disclose the specific CH-acidic 1,3-dicarbonyl compounds of the invention.

The at least one aromatic and/or CH-acidic 1,3-dicarbonyl compound is preferably added in an amount of from 0.01 to 3 wt.-%, preferably from 0.01 to 2 wt.-%, and more preferably from 0.02 to 1.5 wt.-%, and even more preferably from 0.05 to 1 wt.-%, based on the total weight of the multi-component composition. If the added amount is lower than 0.01 wt.-%, the extending effect of the working time is not enough, and if the amount of the 1,3-dicarbonyl compound exceeds 3 wt.-%, the working time might even be shortened. A particular preferred amount of the at least one aromatic and/or CH-acidic 1,3-dicarbonyl compound is 0.1 to 1 wt.-%, based on the total weight of the multi-component composition.

The molar amount of the at least one aromatic and/or CH-acidic 1,3-dicarbonyl compound is preferably in the range of from 0.0004 to 0.14 mole, preferably from 0.0004 to 0.10 mole, and more preferably from 0.001 to 0.07 mole, and even more preferably from 0.002 to 0.05 mole, per 1 kg of the multi-component composition.

Likewise, the amount of the at least one aromatic and/or CH-acidic 1,3-dicarbonyl compound is preferably in the range of from 0.1 to 10 wt.-%, preferably from 0.2 to 5 wt.-%, and more preferably from 0.2 to 3 wt.-%, and even more preferable 0.3 to 2.5, based on the weight of component (B).

The weight ratio of the at least one aromatic and/or CH-acidic 1,3-dicarbonyl compound (b2 by weight) to the at least one isocyanate compound selected from the group consisting of mono isocyanate, polyisocyanate and NCO terminated prepolymer (b1 by weight) (b2 by weight /b1 by weight) in component (B) is preferably in the range of from 0.001 to 0.1, preferably from 0.002 to 0.05, and more preferably from 0.002 to 0.03, and even more preferable 0.003 to 0.025.

The molar ratio of the at least one aromatic and/or CH-acidic 1,3-dicarbonyl compound (b2 by mole) to the at least one isocyanate compound selected from the group consisting of mono isocyanate, polyisocyanate and NCO terminated prepolymer (b1 by mole) (b2 by mole /b1 by mole) in component (B) is preferably in the range of from 0.001 to 0.1, preferably from 0.002 to 0.06, and more preferably from 0.002 to 0.03, and even more preferable 0.003 to 0.028.

### Component (C)

Component (C) comprises (c) a hydraulic binder. As mentioned before, component (A) may include one or more other additives to enhance physical or chemical properties. Such additives are familiar to the skilled person and examples are given above and below.

### Hydraulic binder (c)

Hydraulic binder refers to a class of structural materials which are applied in admixture with water and thereafter harden or set as a result of physical or chemical changes which consume the water present.

The hydraulic binder (c) is or comprise cement and/or lime, including hydrated lime and quicklime. The cement may be a Portland cement, a calcium aluminate cement, a magnesium phosphate cement, a magnesium potassium phosphate cement, a calcium sulfoaluminate cement or any other suitable hydraulic binder.

Component (C) may optionally comprise aggregates, fillers and/or admixtures and optionally other additives.

Aggregates, fillers or inert fillers, respectively, and/ or admixtures may optionally be included in component (C). These optional components can alternatively also be added only on preparation of a mortar or concrete. Preferably, between 0 and 80% by weight, particularly preferably between 30 and 70% by weight, of aggregate and/or inert fillers and/or between 0 and 15% by weight of admixtures may be present or may be added during the cement preparation. These weight data are based on the total weight of the solids of the (anhydrous) hydraulic binder system.

The aggregates can be gravels, silica, quartz, sand, crushed marble, glass spheres, granite, limestone, calcite, feldspar, alluvial sands, any other durable aggregates, and mixtures thereof. Fillers, such as powders, for example based on quartz, limestone, barite or clay, in particular quartz sand, perlite, kieselguhr (diatomaceous earth), exfoliated mica (vermiculite) and foamed sand, can also be used.

Suitable admixtures are, for example, generally known accelerators, retarders, air entraining agents, defoamers, plasticizers, corrosion inhibitors, bonding agents, or mixtures thereof.

### Further additives for the multi-component composition

According to an embodiment of the invention, one or more of the components of the multi-component composition according to the invention may further include one or more other additives.

In certain embodiments of the invention, the other additives may be at least one selected from thixotropic agents, adhesion promoters, antioxidants, light stabilizers, UV stabilizer, surfactant, wetting agents, viscosity modifier, extenders, dispersants, anti-blocking agents, air release agents, anti-sagging agents, anti-setting agents, defoaming agent, matting agents, flattening agents, waxes, anti-mar additives, anti-scratch additives, fiber, polymer powder, mesh, chip, hollow spheres and inert resins.

For those skilled in the art, the above additives are commercially available. The above formulation additives, if any, are presented in an amount commonly used in the art.

### Coloring agent

The multi-component composition may optionally comprise one or more coloring agents. The one or more coloring agents may be contained in any one of components (A), (B) and (C) or in a separate component (D). It is preferred that the one or more coloring agents, if present, are contained in a separate component (D) and/or are contained in component (C). Hence, in one embodiment, the multi-component composition comprises a component (D) comprising one or more coloring agents, and/or component (C) comprises one or more coloring agents.

The coloring agent may be a pigment or a dye. Examples of coloring agents are an organic pigment, organo-metallic pigment, mineral-based pigment, carbon pigments, titanium pigment, azo compound, quinacridone compound, phthalocyanine compound, cadmium pigment, chromium pigment, cobalt pigment, copper pigment, iron pigment, clay earth pigment, lead pigment, mercury pigment, titanium pigment, aluminum pigment, manganese pigment, ultramarine pigment, zinc pigment, arsenic pigment, tin pigment, iron oxide pigment, antimony pigment, barium pigment, a biological pigment, dye, photochromic, conductive and liquid crystal polymer pigment, piezochromic pigment, goniochromatic pigment, silver pigment, diketopyrrolo-pyrrole, benzimidazolone, isoindoline, isoindolinone, radio-opacifier and the like.

For those skilled in the art, the above coloring agents are commercially available. The above coloring agents, if any, are presented in an amount commonly used in the art.

In case, a component (D) comprising one or more coloring agents, in particular one or pigments, is contained in the multi-component composition of the invention, it is generally preferred that component (D) further includes a solvent or dispersing agent for the coloring agent. Examples of suitable solvents or dispersing agent are polyols, preferably castor oil. Possible polyols are described above with respect to organic isocyanate reactive compound (a1). A preferred component (D) is a pigment dispersion in castor oil.

### Proportions of the compounds of the multi-component composition

The amounts of the compounds in the components of the multi-component composition are preferably formulated such that upon mixing the above components in suitable proportions the content of the at least one isocyanate compound (b1) is about 1-40 wt.-%, preferably about 5-35 wt.-%, the content of the at least one isocyanate-reactive compound (a1), preferably polyol, is about 1-25 wt.-%, preferably about 2-20 wt.-%, the content of water (a2) is about 1-15 wt.-%, preferably about 2-10 wt.-%, the content of the catalyst (a3), if present, is about 0.001-5 wt.-%, preferably about 0.001-3 wt.-%, the content of the aromatic and/or CH-acidic 1,3-dicarbonyl compound (b2) is about 0.01-3 wt.-%, preferably about 0.02-1.5 wt.-%, and the content of the hydraulic binder (c) is about 10-70 wt.-%, preferably about 15-50 wt.-%, all based on the total weight of the multi-component composition.

### Application

The components of the multi-component composition are held available in at least three independent packages or sections of packages, preferably three or four, that can be mixed on the spot for application. The components can be mixed at various orders, depending on the packaging arrangement and the intended application.

For use, component (A), component (B), component (C) and optional further components such as component (D) mentioned are mixed with each other to form a mixture which preferably forms a polyurethane/urea cementitious hybrid system. The isocyanate compounds react with the polyols to form polyurethane, with water to form polyurea, while the hydraulic binder reacts with water to cure. These reactions form inorganic network of hydraulic binders and organic network of polyurethanes and urea, resulting in a construction material, such as flooring or coating, with mutual benefits from both of the inorganic cement part and the polyurethane/urea resin part. The application temperature of the multi-component composition is about 5-40 °C, preferably 10-35 °C.

Upon the mixing of the components, the polyurethane reaction, urea reaction and cement hydration take place at once, and the multi-component composition begins to cure. The working time of such polyurethane/urea cementitious hybrid system is usually 15-25 minutes at room temperature and even shorter at temperature above 30 °C, so workers should apply the hybrid system quickly before complete cure of the composition. Nevertheless, with the addition of the specified 1,3-dicarbonyl compound included in component (B), the multi-component composition according to the present invention acquires extended working time while, at the same time, brings no adverse effect on the properties such as overnight cure and final hardness.

It is believed that the extended working time achieved is resulted from the addition of the particularly defined 1,3-dicarbonyl compounds, in particular with the particularly defined use amount as specified above in the present description. Among the above specified 1,3-dicarbonyl compounds, certain compounds may bring about better extending effect of the working time, which will be specifically described in the examples below.

### Process

According to a second aspect, the present invention further provides a process for preparing a layer on a substrate, wherein the layer is preferably a flooring, waterproofing, screed, grouting, primer, wall paint, roofing or coating, the process comprising the steps of:
- mixing the components of the multi-component composition according to the invention as described above to form a mixture;
- applying the mixture onto the substrate; and
- curing the applied mixture to form the layer on the substrate.

In the mixing step of the process of the invention, the components (A), (B) and (C) and optionally further components such as component (D) are mixed together to form a mixture. The components can be mixed at various orders, depending on the packaging arrangement and the intended application.

The layer, in particular, the flooring, waterproofing, screed, grouting, primer, wall paint, roofing or coating obtained by the process of the present invention has a high compression strength, which is preferably at least 45 N/mm², more preferably at least 50 N/mm², and most preferably at least 55 N/mm², and a tensile strength preferably of at least 5 N/mm², more preferably at least 7 N/mm², and most preferably at least 9 N/mm². Such layers, in particular flooring, waterproofing, screed, grouting, primer, wall paint, roofing or coating, can be cured in less than 24 hours at a broad range of temperatures, and shows improved chemical, abrasion and impact resistance.

In one embodiment, the multi-component composition of the invention is used to prepare a flooring, in particular in form of a polyurethane/urea cementitious hybrid system. The components of the multi-component composition are mixed and applied to the floor to be surfaced. The mixture is left to harden sufficiently, preferably overnight. In a preferred embodiment, a second layer formed from the multi-component composition of the invention, in particular a polyurethane/urea cementitious hybrid system is formed on top of the first layer formed from the multi-component composition after 24 hours and left to cure overnight to form the flooring.

In one embodiment, the multi-component composition of the invention is used to prepare decorative flooring surfaces, in particular in form of a polyurethane/urea cementitious hybrid system. The floor to be surfaced is firstly bonded with fragments of plastic or other materials such as stone or marble by means of any polymer, natural or synthetic, which have adhesive properties. The multi-component composition, optionally comprising coloring agents, preferably pigments, is used as a grouting mixture and applied over the bonded fragments. The hybrid system is left to harden sufficiently for surface-grinding to be carried out, although it is not essential to wait until curing is complete. It is convenient to allow the composition to harden overnight. The rather rough surface then obtained is ground flat and smooth using similar techniques to those employed for grinding and finishing conventional Terrazzo floors.

The present invention may also be employed for the surfacing of other areas, flat, curved or inclined, providing that the grouting composition is sufficiently viscous to remain on such areas while hardening occurs.

### Use

According to a third aspect, the present invention provides for the use of the multi-component composition of the invention for the preparation of a flooring, waterproofing, screed, primer, wall paint, grouting, roofing or coating in construction applications.

According to a fourth aspect an aromatic and/or CH-acidic 1,3-dicarbonyl compound is used in component (B) of a multi-component composition as a retarding agent and/or for providing a storage-stable multi-component composition, in particular for a polyurethane/urea cementitious hybrid system obtained by mixing the components of the multi-component composition, wherein the multi-component composition comprises:
a component (A) comprising
   (a1) at least one organic isocyanate-reactive compound selected from the group consisting of polyol, polyamide, polyamine, and polyesteramide;
   (a2) water; and
   (a3) optionally a catalyst;
a component (B) comprising
   (b1) at least one isocyanate compound selected from the group consisting of mono isocyanate, polyisocyanate and NCO terminated prepolymer;
and a component (C) comprising
   (c) a hydraulic binder.

The aromatic and/or CH-acidic 1 ,3-dicarbonyl compound is as defined above as ingredient (b2) of the multi-component composition. The multi-component composition is preferably the multi-component composition of the invention as described above. Reference is made thereto.

Accordingly, the aromatic and/or CH-acidic 1,3-dicarbonyl compound is suitable as a retarding agent in said multi-component compositions, in particular for polyurethane/urea cementitious hybrid systems. This results in an extended working time of the mixture obtained by mixing the components of the multi-component composition, wherein the mixture preferably results in a polyurethane/urea cementitious hybrid system as compared to the same multi-component composition, which does not contain the aromatic and/or CH-acidic 1,3-dicarbonyl compound.

At the same time, multi-component compositions with good storage stability are provided, when the aromatic and/or CH-acidic 1,3-dicarbonyl compound is incorporated in component (B) of the multi-component composition. The storage stability is comparable to the same multi-component composition, which does not contain the aromatic and/or CH-acidic 1,3-dicarbonyl compound.

The present invention will now be described with reference to the following Examples, which are not intended to limit the invention.

### Examples

The following starting materials were used in the following Examples unless otherwise stated:
Portland cement 42.5;
Isocyanate: Lupranat ^{®} MI (mixture of 2,4'-MDI and 4,4'-MDI, BASF SE);
Polyol: Castor oil;
Water;
Amine catalyst: N,N,N',N'-Tetrakis(hydroxyethyl)ethylenediamine,

### Example 1 - 1,3-dicarbonyl compound as retarding agent

In this example, the suitabillity of various 1,3-dicarbonyl compounds as a retarding agent are tested. In this regard, the components of the multi-component composition were not prepared, but the ingredients were directly mixed with each other.

The process was as follows: Mixing all the liquid components (isocyanate, polyol, water and catalyst) at 600 rpm for 1 min, then adding the solid component (Portland cement) and mixing continuously for another 2.5 min. The mixing equipment was a cement mixer for a large batch of materials and an IKA mechanical mixer for a small batches.

The working time was determined according to the following method: The components are mixed, and the material obtained is then poured onto a test surface within a mold to form a layer with a thickness of about 4 mm. The time measurement is started immediately after the mixing of liquid and solid components. After selected time intervals, eg. 1-2 minutes, a roller with spikes is applied, and several marks are scratched into the screed in the full depth of the applied material and the healing of the surface was investigated. At first, the marks will disappear readily when the material still has good flowability. After a certain period of time, the marks in the screed will become more and more visible, until eventually there is no re-joining of the edges, which are formed by the scratched marks. At the specific time where a visible mark remains, even though the edges have joined, the time is recorded as the working time.

30 parts of Lupranat ^{®} Ml, 10 parts of castor oil, 9.91 parts of water and 0.09 parts of N,N,N',N'-Tetrakis (hydroxyethyl) ethylenediamine and 1,3 dicarbonyl additive as shown in Table 1 were mixed together for 1 min until the mixture became homogenous. Then 25 parts of Portland cement were added and mixed uniformly for another 2.5 min. Various compositions were prepared, wherein the type of the 1,3-dicarbonyl additive was altered as shown in the following Table 1. The addition of a 1,3-dicarbonyl additive was omitted in the comparative example.

At a temperature of 23 °C and a relative humidity of 35 %, each of the above mixtures prepared was individually applied onto a substrate as a layer with thickness of 4 mm and left undisturbed for curing. The working time was tested in the same environment according to the methods stated above. The results were summarized in the following Table 1. As can be seen from the Table, the 1,3-dicarbonyl compounds according to the invention showed extended working times.

**Table 1:**

| **Structure** | **1,3-Dicarbonyl content on total mixture (wt.-%)** | **CAS. No.** | **IUPAC name** | **Supplier** | **Working time at 23 °C [min]** |
|---|---|---|---|---|---|
| Comparative Example | 0 | ----------- | -------------------------------------------------- | ------------------- | 20 |
| 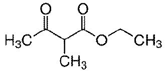 | 1 | 609-14-3 | **Ethyl 2-methyl-3-oxobutanoate** | Sigma Aldrich | 21 |
| 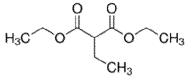 | 1 | 133-13-1 | **Diethyl 2-ethylmalonate** | Sigma Aldrich | 21.5 |
| 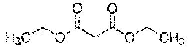 | 1 | 105-53-3 | **Diethyl malonate** | Sigma Aldrich | 22.5 |
| 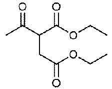 | 1 | 1115-30-6 | **Diethyl 2-acetylsuccinate** | Sigma Aldrich | 23.5 |
| 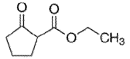 | 1 | 611-10-9 | **Ethyl 2-oxocyclopentane-1-carboxylate** | Sigma Aldrich | 27 |
| 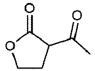 | 1 | 517-23-7 | **3-Acetyldihydrofuran-2(3H)-one** | Sigma Aldrich | 32.5 |
| 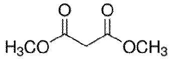 | 1 | 108-59-8 | **Dimethyl malonate** | Sigma Aldrich | 28 |
| 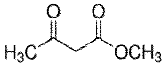 | 1 | 105-45-3 | **Methyl 3-oxobutanoate** | Sigma Aldrich | 29 |
| 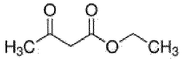 | 1 | 141-97-9 | **Ethyl 3-oxobutanoate** | Sigma Aldrich | 34 |
| 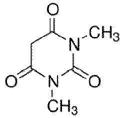 | 1 | 769-42-6 | **1,3-Dimethylpyrimidine-2,4,6(1H,3H,5H)-trione** | Sigma Aldrich | 31 |
| 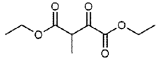 | 1 | 759-65-9 | **Diethyl 2-methyl-3-oxosuccinate** | Sigma Aldrich | 34 |
| 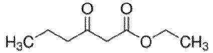 | 1 | 3249-68-1 | **Ethyl 3-oxohexanoate** | Sigma Aldrich | 39.5 |
| 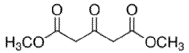 | 1 | 1830-54-2 | **Dimethyl 3-oxopentanedioate** | Sigma Aldrich | 55 |
| 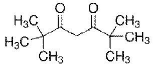 | 1 | 1118-71-4 | **2,2,6,6-Tetramethylheptan-3,5-dion** | Sigma Aldrich | 30.5 |
| 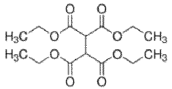 | 1 | 632-56-4 | **Tetraethyl ethane-1,1,2,2-tetracarboxylate** | Sigma Aldrich | 25 |
| 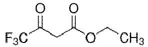 | 1 | 372-31-6 | **Ethyl 4,4,4-trifluoro-3-oxobutanoate** | Alfa Aesar | 41 |
| 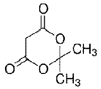 | 1 | 2033-24-1 | **2,2-Dimethyl-1,3-dioxane-4,6-dione** | Alfa Aesar | 31 |
| 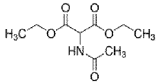 | 1 | 1068-90-2 | **Diethyl 2-acetamidomalonate** | Sigma Aldrich | 22.5 |
| 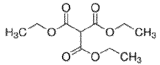 | 1 | 6279-86-3 | **Triethyl methanetricarboxylate** | Alfa Aesar | 31.5 |
| 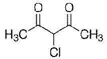 | 1 | 1694-29-7 | **3-Chloropentane-2,4-dione** | Sigma Aldrich | 58 |
| 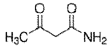 | 1 | 5977-14-0 | **3-Oxobutanamide** | Sigma Aldrich | 27 |
| 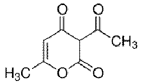 | 1 | 520-45-6 | **3-Acetyl-6-methyl-2H-pyran-2,4(3H)-dione** | Sigma Aldrich | 26 |
| 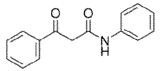 | 1 | 959-66-0 | **3-Oxo-N,3-diphenylpropanamide** | Sigma Aldrich | 56 |
| 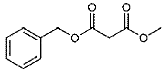 | 1 | 52267-39-7 | **Benzyl methyl malonate** | Alfa Aesar | 26.5 |
| 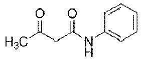 | 1 | 102-01-2 | **3-Oxo-N-phenylbutanamide** | Alfa Aesar | 79.5 |
| 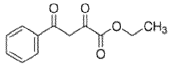 | 1 | 6296-54-4 | **Ethyl 2,4-dioxo-4-phenylbutanoate** | Sigma Aldrich | 27.5 |
| 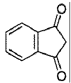 | 1 | 606-23-5 | **1H-Indene-1,3(2H)-dione** | Alfa Aesar | 33 |
| 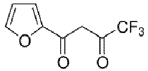 | 1 | 326-90-9 | **4,4,4-Trifluoro-1-(fura**n-2-**yl)butane-1,3-dione** | Alfa Aesar | 31.5 |
| 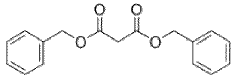 | 1 | 15014-25-2 | **Dibenzyl malonate** | Alfa Aesar | 26.5 |
| 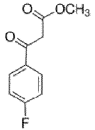 | 1 | 63131-29-3 | **Methyl 3-(4-fluorophenyl)-3-oxopropanoate** | Alfa Aesar | 66.5 |
| 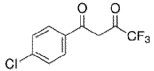 | 1 | 18931-60-7 | **1-(4-Chlorophenyl)-4,4,4-trifluoro-1,3-butanedione** | Sigma Aldrich | 54.5 |
| 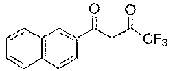 | 1 | 893-33-4 | **4,4,4-Trifluoro-1 -(naphthalen-2-yl)butane-1,3-dione** | Alfa Aesar | 47 |
| 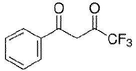 | 1 | 326-06-7 | **4,4,4-Trifluoro-1-phenylbutane-1,3-dione** | Alfa Aesar | 58 |
| 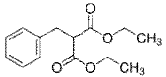 | 1 | 607-81-8 | **Diethyl 2-benzylmalonate** | Sigma Aldrich | 22.5 |
| 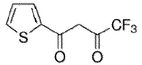 | 1 | 326-91-0 | **4,4,4-Trifluoro-1 -(thiophen-2-yl)butane-1,3-dione** | Sigma Aldrich | 45.5 |
| 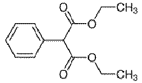 | 1 | 83-13-6 | **Diethyl 2-phenylmalonate** | Alfa Aesar | 23 |
| 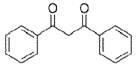 | 1 | 120-46-7 | **1,3-Diphenylpropane-1,3-dione** | Sigma Aldrich | 49 |
| 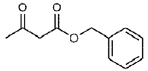 | 1 | 5396-89-4 | **Benzyl 3-oxobutanoate** | Sigma Aldrich | 39.5 |
| 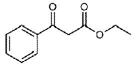 | 1 | 94-02-0 | **Ethyl 3-oxo-3-phenylpropanoate** | Sigma Aldrich | 68 |
| 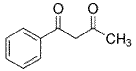 | 1 | 93-91-4 | **1-Phenylbutane-1,3-dione** | Sigma Aldrich | 68 |
| 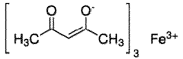 | 1 | 14024-18-1 | **Iron(III) tris(4-oxopent-2-en-2-oleate) (contains the 1,3-dicarbonyl form in the equilibrium)** | Sigma Aldrich | 38.5 |
| 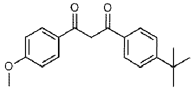 | 1 | 274-581-6 | **1-(4-(Tert-butyl)phenyl)-3-(4-methoxyphenyl)propane-1,3-dione** | Sigma Aldrich | 45.5 |
| 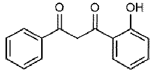 | 1 | 1469-94-9 | **1-(2-Hydroxyphenyl)-3-phenylpropane-1,3-dione** | Alfa Aesar | 55.5 |
| 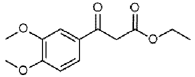 | 1 | 4687-37-0 | **Ethyl 3-(3,4-dimethoxyphenyl)-3-oxopropanoate** | Sigma Aldrich | 44 |

### Reference example 1 - Multi-component composition with sand

A multi-component composition of Reference example 1 was prepared with the following components:

### Component (A), 11 wt.-%,

Castor oil 43 wt.-%, plasticizer (blend of phthalate and non-phthalate plasticizer) 11 wt.-%, defoamer 1 wt.-%, diluent 7 wt.-%, catalyst mix (containing tertiary amines) 8 wt.-%, water 30 %

### Component (B), 14 wt.-%

100% mixture of 2,4'-MDI and 4,4'-MDI, NCO-functionality approximately 2.2;

### Component (C), 72 wt.-%

sand (particle size distribution 0.15-0.6 mm) 73 wt.-%, cement 24 wt.-% and hydrated lime 3 wt.-%.

### Component (D), 3 wt.-%

40 wt.-% pigment, 40 wt.-% castor oil and 20 wt.-% plasticizer (blend of phthalate and non-phthalate plasticizer)

### Reference example 2 - Multi-component composition with aggregate

A multi-component composition of Reference example 2 was prepared with the following components:

### Component (A), 10 wt.-%,

castor oil 43 wt.-%, plasticizer (blend of phthalate and non-phthalate plasticizer) 11 wt.-%, defoamer 1 wt.-%, diluent 7 wt.-%, catalyst mix (containing tertiary amines) 8 wt.-%, water 30 %

### Component (B), 10 wt.-%

100% mixture of 2,4'-MDI and 4,4'-MDI, NCO-functionality approximately 2.2;

### Component (C), 77 wt.-%

sand (particle size distribution 0.15-0.6 mm) 34 wt.-%, flint (particle size distribution 1.6-3.0 mm) 44 wt.-%, cement 20 wt.-% and hydrated lime 2 wt.-%.

### Component (D), 3 wt.-%

40 wt.-% pigment, 40 wt.-% castor oil and 20 wt.-% plasticizer (blend of phthalate and non-phthalate plasticizer)

### Reference example 3 - Multi-component composition with glass beads

A multi-component composition of Reference example 3 was prepared with the following components:

### Component (A), 11 wt.-%,

castor oil 43 wt.-%, plasticizer (blend of phthalate and non-phthalate plasticizer) 11 wt.-%, defoamer 1 wt.-%, diluent 7 wt.-%, catalyst mix (containing tertiary amines) 8 wt.-%, water 30 %

### Component (B), 14 wt.-%

100% mixture of 2,4'-MDI and 4,4'-MDI, NCO-functionality approximately 2.2;

### Component (C), 72.0 wt.-%

Glass beads 73 wt.-%, cement 24 wt.-% and hydrated lime 3 wt.-%.

### Component (D), 3 wt.-%

40 wt.-% pigment, 40 wt.-% castor oil and 20 wt.-% plasticizer (blend of phthalate and non-phthalate plasticizer)

### Example 2 - Compatibilty of 1,3 dicarbonyl compound in components

In this example, the compatibility/solubility of a 1,3 dicarbonyl compound in each component of the multi-component composition of Reference example 1 was tested.

In each of the components of the multi-component composition of Reference example 1 prepared, 1,3-diphenylpropane-1,3-dione (CAS 120-46-7) also designated dibenzoylmethane (DBM) was added in an amount of 0.5 wt.-%, based on the total weight of modified multi-component composition, and visually inspected. The following observations are made:

### Example 2 - Trial 1 - Addition of DBM in component (A)

No bottom set of solid DBM, but loss of emulsion quality, stability - increased tendency to split of water/castor oil phase

### Example 2 - Trial 2 - Addition of DBM in component (B)

Completely soluble + no negative side effect on long term stability of component

### Example 2 - Trial 3 - Addition of DBM in component (C)

DBM powder miscible into the powder component, but loss of retardation ability (see Example 5).

### Example 2 - Trial 4 - Addition of DBM in component (D)

Bad, incomplete solubility in the liquid component of the dispersion

### Example 3 - Effect of dosage of 1,3 dicarbonyl compound added on working time

In this example, the effect of the amount of the 1,3 dicarbonyl compound added into a multi-component composition on the working time was tested.

The multi-component composition of Reference example 1 was used, wherein 1,3-diphenylpropane-1,3-dione (DBM) is added to component (B) in various amounts as shown in Table 2 to form a modified component (B).

The working time is determined according to the following method at a temperature of 20°C: The components of the modified multi-component composition are mixed in the following weight ratio: Component (A) : Component (B) : Component (C) : Component (D) = 11 : 14 : 72 : 3. The material obtained is then poured onto a test surface within a mold to form a layer with a thickness of about 4 mm. The time measurement is started immediately after the mixing of liquid and solid components. After selected time intervals, e.g. 1-2 minutes, a roller with spikes is applied, and several marks are scratched into the screed in the full depth of the applied material and the healing of the surface was investigated. At first, the marks will disappear readily when the material still has good flowability. After a certain period of time, the marks in the screed will become more and more visible, until eventually there is no re-joining of the edges, which are formed by the scratched marks. At the specific time where a visible mark remains, even though the edges have joined, the time is recorded as the working time.

Moreover, the solubility of DBM in component (B) and the matt/ gloss appearance of the layers obtained are inspected.

The results are given in the following Table 2. The amount of DBM is given, based on the weight of modified component (B) ("on Co B") and based on the total weight of the modified multi-component composition ("on total").

**Table 2**

| DBM | 0% | 3 wt% on Co B/ 0.42 wt% on total | 4 wt% on Co B/ 0.56 wt% on total | 5 wt% on Co B/ 0.71 wt% on total | 6 wt% Co B/ 0.85 wt% on total |
|---|---|---|---|---|---|
| **Properties** | | | | | |
| Solubility in component (B) | | Very good | Very good | Very good | Very good |
| Working time | 22 | 44 | 46 | n.d. | 27 |
| Matt/ gloss appearance | matt | mottled gloss | satin gloss | glossy | high gloss |

| | | | | | |
|---|---|---|---|---|---|
| n.d. not determined | | | | | |

### Example 4 - Dependence of retardation ability on type and dosage of 1,3 dicarbonyl compound added

In this example, the effect of the type and dosage of 1,3 dicarbonyl compound added into a multi-component composition on the working time was tested based on a rheometer test.

The multi-component composition of Reference example 3 was used as starting point, wherein in component (B) of Reference example 3 one of the following 1,2-dicarbonyl compounds is added in various amounts as shown in Table 3: acetylbutyrolactone, 1,3-diphenylpropane-1,3-dione (DBM) or 1,3-butanedione.

The amounts of the components used were 15.12 g of component (A); 17.16 g of component (B); 24.72 g of component (C); 3.00 g of component (D); + diketone in wt-% related to component (B)

Preparation method: Component (A) and Component (D) are mixed for 100 sec at 500 rpm. Then Component (B) (including diketone) is added and stirred for 60 sec at 500 rpm. After that, Component (C) is added during mixing and the whole mix mixed for 3 min. The mixture is then applied on rheometer for analysis.

The working life was determined in oscillation on Anton Paar Rheometer. The parameters are: Gap: 0.75 mm; plate/plate geometry.

Homogenization and rotation experiment before oscillation: shear: 150 sec⁻¹ for 120 sec, logarithmic shear ramp: from 150 sec⁻¹ to 0 sec⁻¹ in 60 sec, waiting: 0 sec⁻¹ for 30 sec.

Oscillation measurement: shear deformation 0.1 %; angular frequency 10 rad/s; measuring points 43; measuring time per point 60 sec; temperature - depending on requirement (23 or 33 °C). The working life is the cross point of G' and G".

The results are given in the following Table 3 for a measurement at 23°C. The amount of the diketone is given, related to the weight of component (B) and based on the total weight of the multi-component composition ("on total").

**Table 3. Measurement at 23 °C**

| Dosage of diketone related to Component (B) | 0% | 1 wt% (0.29 wt% on total) | 3.5 wt% (1.0 wt% on total) | 6 wt% (1.72 wt% on total) |
|---|---|---|---|---|
| Working life with α-acetylbutyrolactone [min] | 20 | 25-27 | 33 | 38 |
| Working life with DBM [min] | 20 | 33-35 | 54 | 155 |
| Working life with ethylbenzoylacetate [min] | 20 | 33-35 | n.d. | 98 |
| Working life with 1-phenyl-1,3-butanedione [min] | 20 | 33-35 | 38 | 56 |

| | | | | |
|---|---|---|---|---|
| n.d. = non determined | | | | |

In all cases at dosage of 3.5 and 6 %, the mixture shows significantly higher texture. So even if the working life is very high when determined according to this rheometer method, the mixture is not preferred because self-leveling during application is hindered as shown in a test of application of the materials. It should be noted that in these tests very fine aggregates (glass beads) are used instead of sand, also because the size of sand is not suitable for this rheometer method (too large for the gap).

### Example 5 - Stability test

This example studies the storage stability of multi-component compositions depending on the place of addition of the 1,3 dicarbonyl compound.

The multi-component composition of Reference example 3 was used, with the variations described in Trials 1-4 below. The components prepared were stored for 1 week or 4 weeks respectively, and then subjected to the rheometer test described in Example 4 measured at 33°C to determine the working life.

### Example 5 - Trial 1

1 wt.-% DBM, based on the total weight of the multi-component composition, was mixed into component (B), then storage for 1 week or 4 weeks respectively.

### Example 5 - Trial 2

1 wt.-% DBM, based on the total weight of the multi-component composition, was mixed in component (D), then storage for 1 week or 4 weeks respectively.

### Example 5 - Trial 3

No DBM was added to the components, but DBM (1 wt.%, based on total weight of the multi-component composition) was added during mixing of the stored components and the mixture is used for measurement

### Example 5 - Trial 4

No DBM was added, neither to the components nor to the mixture of the stored components.

The results are given in the following Table 4

**Table 4. Measurement at 33 °C**

| | Working life [min] After 1 week | Working life [min] After 4 weeks |
|---|---|---|
| Trial 1 | 22 | 22 |
| Trial 2 | 15 | 15 |
| Trial 3 | 21 | 21 |
| Trial 4 | 16 | 16 |

### Example 6 - Appearance of layers prepared

This example evaluates the gloss appearance and possible pinhole issues of the layers obtained from the multi-component composition using coarse aggregates depending on the amount of 1,2 dicarbonyl compound added.

The multi-component composition of Reference example 2 was used, wherein DBM was added in various amounts in component (B) as shown in Tables 5, 6 and 7.

The application was carried out at different temperatures (10°C, 20°C, 30°C). The preparation of the layers was as follows: The components are mixed, and the material obtained is then poured onto a test surface within a mold to form a layer with a thickness of about 4 mm.

The appearance of the layers obtained is visually inspected. The test with no DBM included serves as a reference. The results are given in following Tables 5, 6 and 7. The wt% of DBM given in the tables are based in each case on the weight of component (B).

**Table 5: Application at 10 °C**

| DBM | 0 % | 1 wt% | 2 wt% | 3 wt% | 4 wt% | 5 wt% | 6 wt% |
|---|---|---|---|---|---|---|---|
| Gloss/matt | matt | matt | Matt with glossy spots | Satin finish | Almost fully glossy | Almost fully glossy | Full gloss |
| pinholes | Standard | No change | No change | increase | Further increase | Further increase | Further increase |

**Table 6: Application at 20 °C**

| DBM | 0 % | 1 wt% | 2 wt% | 3 wt% | 4 wt% | 5 wt% | 6 wt% |
|---|---|---|---|---|---|---|---|
| Gloss/matt | matt | matt | matt | slight sheen | glossier | Almost fully glossy | Full gloss |
| pinholes | Standard | No change | increase | Further increase | Further increase | Further increase | Further increase |

**Table 7: Application at 30 °C**

| DBM | 0 % | 1 wt% | 2 wt% | 3 wt% | 4 wt% | 5 wt% | 6 wt% |
|---|---|---|---|---|---|---|---|
| Gloss/matt | matt | matt | Slight sheen | Faint satin sheen | Satin sheen | Fairy glossy | Full gloss |
| pinholes | Standard | decrease | increase | Further increase | Further increase | Further increase | Further increase |

### Example 7 - Hardness test of layers prepared

This example evaluates the hardness of the layers obtained from the multi-component composition depending on the amount of 1,2 dicarbonyl compound added.

The multi-component composition of Reference example 1 was used, wherein DBM or 1-phenyl-1,3-butandione was added in various amounts in component (B) as shown in Tables 8, 9 and 10.

The tests were carried out at different temperatures as given in the tables (5 °C, 23°C).

The Shore D hardness of the layers obtained were determined after 24 h and after 48 h or after 24 h and after 40 h, respectively.

The test with no 1,2 dicarbonyl compound added serves as a reference. The results are given in following Tables 8, 9 and 10. The wt% of 1,3 dicarbonyl compound given in the tables is based on the weight of component (B).

**Table 8: Application at 5 °C**

| Dosage of DBM [wt%] | 0 | 1 | 3.5 | 6 |
|---|---|---|---|---|
| Shore D 24 h | 30 | 33 | 37 | 48 |
| Shore D 48 h | 63 | 63 | 65 | 69 |

**Table 9: Application at 23 °C**

| Dosage of DBM [wt%] | 0 | 1 | 3.5 | 6 |
|---|---|---|---|---|
| Shore D 24 h | 71 | 73 | 74 | 76 |
| Shore D 48 h | 75 | 76 | 78 | 78 |

**Table 10: Application at 23°C, dosage of diketone (DBM or 1-phenyl-1,3-butandione): 3.5 wt%**

| Diketone | Shore D 24 h | Shore D 40 h |
|---|---|---|
| None (standard) | 71 | 76 |
| 1-phenyl-1,3-butandione | 75 | 78 |
| DBM | 76 | 79 |

As is seen from the results, the addition of the 1,3-dicarbonyl compound improves shore D hardness of the layers.

## Claims

1. A multi-component composition comprising:
a component (A) comprising
(a1) at least one organic isocyanate-reactive compound selected from the group consisting of polyol, polyamide, polyamine, and polyesteramide;
(a2) water; and
(a3) optionally a catalyst;
a component (B) comprising
(b1) at least one isocyanate compound selected from the group consisting of mono isocyanate, polyisocyanate and NCO terminated prepolymer; and
(b2) at least one aromatic and/or CH-acidic 1,3-dicarbonyl compound;
and a component (C) comprising
(c) a hydraulic binder.

2. The multi-component composition according to claim 1, wherein the at least one isocyanate compound (b1) is selected from the group consisting of n-hexylisocyanate, cyclohexylisocyanate, hexamethylene isocyanate, 2-ethyl hexylisocyanate, n-octyl isocyanate, deodecyl-isocyanate, stearylisocyanate, benzyl isocyanate, diphenylmethane diisocyanate (MDI), oligomeric and polymeric MDI, tetramethylene diisocyanate, hexamethylene diisocyanate (HDI), trimeric HDI, isophorone diisocyanate (IPDI), tolylene diisocyanate (TDI), and mixtures of two or more of these isocyanates.

3. The multi-component composition according to claim 1 or 2, wherein the at least one organic isocyanate-reactive compound (a1) is selected from the group consisting of polyhydric polyols, aminoalcohols, polyether polyols, polyester polyols, polycarbonate polyols and mixtures thereof, wherein the at least one organic isocyanate-reactive compound (a1) is preferably castor oil.

4. The multi-component composition according to any one of claims 1 to 3, wherein the catalyst (a3) is selected from the group consisting of amine-based catalysts and catalysts based on organic metal compounds.

5. The multi-component composition according to any one of claims 1 to 4,
wherein the aromatic 1,3-dicarbonyl compound (b2) has the formula (I)
R₁-C(O)-CHR₂-C(O)-R₃ (I)
wherein
R₁, R₂ and R₃ are independently from each other selected from H, C₁-C₈-alkyl, C₁-C₈-alkoxy, C₄-C₁₀-(hetero)aryl, C₄-C₁₀-(hetero)aryloxy, C₅-C₁₈-alkyl(hetero)aryl, C₅-C₁₈-alkyl(hetero)aryloxy, C₅-C₁₈-(hetero)arylalkyl, C₅-C₁₈-(hetero)arylalkoxy, provided that the molecule comprises at least one aryl group or heteroaryl group, R₁, R₂ and/or R₃ being optionally and independently from each other substituted by C₁-C₆-alkyl-, cyano-, amino-, halogen-, hydroxyl-, or oxo groups,
or
R₁ and R₂, R₁ and R₃, or R₂ and R₃, together with the carbon atoms attached, form a 5- to 8-membered ring or hetero ring, provided that the molecule comprises at least one aryl group or heteroaryl group, R₁, R₂ and/or R₃ being optionally substituted by C₁-C₆-alkyl-, cyano-, amino-, halogen,- hydroxyl-, or oxo groups; and/or
wherein the CH-acidic 1,3-dicarbonyl compound (b2) has the formula (I)
R₁-C(O)-CHR₂-C(O)-R₃ (I)
wherein
R₁, R₂ and R₃ are independently from each other selected from H, C₁-C₈-alkyl, C₁-C₈-alkoxy, C₄-C₁₀-(hetero)aryl, C₄-C₁₀-(hetero)aryloxy, C₅-C₁₈-alkyl(hetero)aryl, C₅-C₁₈-alkyl(hetero)aryloxy, C₅-C₁₈-(hetero)arylalkyl, C₅-C₁₈-(hetero)arylalkoxy, R₁, R₂ and/or R₃ being optionally and independently from each other substituted by C₁-C₆-alkyl-, cyano-, amino-, halogen-, hydroxyl-, or oxo groups,
or
R₁ and R₂, R₁ and R₃, or R₂ and R₃, together with the carbon atoms attached, form a 5- to 8-membered ring or hetero ring, R₁, R₂ and/or R₃ being optionally substituted by C₁-C₆-alkyl-, cyano-, amino-, halogen,- hydroxyl-, or oxo groups;
provided that, if they have no aryl or heteroaryl groups in the molecule, they have a pKa-value calculated to be less than 20, preferably less than 15 and most preferably less than 12.

6. The multi-component composition according to any one of claims 1 to 5, wherein the aromatic 1,3-dicarbonyl compound (b2) is selected from 3-acetyl-6-methyl-2H-pyran-2,4(3H)-dione, 3-oxo-N,3-diphenylpropanamide, benzyl methyl malonate, 3-oxo-N-phenylbutanamide, ethyl 2,4-dioxo-4-phenylbutanoate, 1H-indene-1,3(2H)-dione, 4,4,4-trifluoro-1-(furan-2-yl)butane-1,3-dione, dibenzyl malonate, ethyl 2,4-dioxo-4-phenyl-butanoate, 1H-indene-1,3(2H)-dione, 4,4,4-trifluoro-1-(furan-2-yl)butane-1,3-dione, dibenzyl malonate, methyl 3-(4-fluorophenyl)-3-oxopropanoate, 1-(4-chlorophenyl)-4,4,4-trifluoro-1,3-butanedione, 4,4,4-trifluoro-1-(naphthalen-2-yl)butane-1,3-dione, 4,4,4-trifluoro-1-phenylbutane-1,3-dione, diethyl 2-benzylmalonate, 4,4,4-trifluoro-1-(thiophen-2-yl)butane-1,3-dione, diethyl 2-phenylmalonate, 1,3-diphenylpropane-1,3-dione, benzyl 3-oxobutanoate, ethyl 3-oxo-3-phenylpropanoate, 1-phenylbutane-1,3-dione, 1-(4-(tert-butyl)phenyl)-3-(4-methoxyphenyl)propane-1,3-dione, 1-(2-hydroxyphenyl)-3-phenylpropane-1,3-dione, ethyl 3-(3,4-dimethoxyphenyl)-3-oxopropanoate and mixtures thereof.

7. The multi-component composition according to any one of claims 1 to 5, wherein the CH-acidic 1,3-dicarbonyl compound (b2) is selected from ethyl 2-methyl-3-oxobutanoate, diethyl 2-ethylmalonate, diethyl malonate, diethyl 2-acetylsuccinate, ethyl 2-oxocyclo-pentane-1-carboxylate, 3-acetyldihydrofuran-2(3H)-one, dimethyl malonate, methyl 3-oxobutanoate, ethyl 3-oxobutanoate, 1,3-dimethylpyrimidine-2,4,6(1H,3H,5H)-trione, diethyl 2-methyl-3-oxosuccinate, ethyl 3-oxohexanoate, dimethyl 3-oxopentanedioate, 2,2,6,6-tetramethylheptan-3,5-dion, tetraethyl ethane-1,1,2,2-tetracarboxylate, ethyl 4,4,4-trifluoro-3-oxobutanoate, 2,2-dimethyl-1,3-dioxane-4,6-dione, diethyl 2-acetamidomalonate, triethyl methanetricarboxylate, 3-chloropentane-2,4-dione, 3-oxobutanamide, 3-acetyl-6-methyl-2H-pyran-2,4(3H)-dione and mixtures thereof.

8. The multi-component composition according to any one of claims 1 to 7, wherein the at least one 1,3-dicarbonyl compound (b2) is added in an amount of from 0.01 to 3 wt.-%, preferably from 0.01 to 2 wt.-%, and more preferably from 0.02 to 1.5 wt.-%, and even more preferably from 0.05 to 1 wt.-%, based on the total weight of the multi-component composition.

9. The multi-component composition according to any one of claims 1 to 8,
wherein the hydraulic binder (c) comprises cement and/or lime, and/or
wherein component (C) comprises aggregates, fillers and/or admixtures.

10. The multi-component composition according to any one of claims 1 to 9,
wherein the multi-component composition comprises a component (D) comprising one or more coloring agents, and/or
wherein component (C) comprises one or more coloring agents.

11. A process for preparing a layer on a substrate, wherein the layer is preferably a flooring, waterproofing, screed, grouting, primer, wall paint, roofing or coating, the process comprising the steps of:
- mixing the components of the multi-component composition according to any one of claims 1 to 10 to form a mixture;
- applying the mixture onto the substrate; and
- curing the applied mixture to form the layer on the substrate.

12. Use of the multi-component composition according to any one of claims 1 to 10 for the preparation of a flooring, waterproofing, screed, primer, wall paint, grouting, roofing or coating in construction applications.

13. Use of an aromatic and/or CH-acidic 1 ,3-dicarbonyl compound in component (B) of a multi-component composition as a retarding agent and/or for providing a storage-stable multi-component composition, in particular for a polyurethane/urea cementitious hybrid system obtained by mixing the components of the multi-component composition, wherein the multi-component composition comprises:
a component (A) comprising
(a1) at least one organic isocyanate-reactive compound selected from the group consisting of polyol, polyamide, polyamine, and polyesteramide;
(a2) water; and
(a3) optionally a catalyst;
a component (B) comprising
(b1) at least one isocyanate compound selected from the group consisting of mono isocyanate, polyisocyanate and NCO terminated prepolymer;
and a component (C) comprising
(c) a hydraulic binder,
wherein the multi-component composition is preferably as defined in any one of claims 1 to 10.
